# EUROPÄISCHE PATENTSCHRIFT

(11) **EP 2 251 278 B1**
(45) Veröffentlichungstag und Bekanntmachung des Hinweises auf die Patenterteilung: **27.04.2011**
(21) Anmeldenummer: 10002909.9
(22) Anmeldetag: 19.03.2010
(51) Int. Cl.: B65G 1/04, B65G 57/18

(54) **Vorrichtung zum Ausheben von Lastelementen**
Device for lifting load elements
Dispositif destiné à lever des éléments de charge

(30) Priorität: 15.05.2009 DE 202009007073 U
(43) Veröffentlichungstag der Anmeldung: 17.11.2010
(73) Patentinhaber: KEURO Besitz GmbH & Co. EDV-Dienstleistungs KG, 77855 Achern (DE)
(72) Erfinder: Bähr Markus,, 77855 Achern (DE); Huber Bernhard, 77876 Kappelrodeck (DE)
(74) Vertreter: Lemcke, Brommer & Partner

(56) Entgegenhaltungen:
- DE-A1- 4 224 206
- DE-B1- 2 634 629

## Beschreibung

Die vorliegende Erfindung betrifft eine Vorrichtung zum Ausheben von Lastelementen, insbesondere Metallstangen, aus einer Ablagevorrichtung, wobei die Ablagevorrichtung wenigstens eine bodenseitige Öffnung zum Einfahren einer Hebeeinrichtung der Vorrichtung aufweist und die Vorrichtung ein Betätigungselement zum Bewirken einer Hubbewegung der Hebeeinrichtung umfasst.

Längliche Lastelemente, insbesondere Metallstangen, werden zweckmäßigerweise in kassettenartigen Ablageeinrichtungen gelagert, welche seitliche Haltestangen nach Art von Rungen aufweisen, um ein Herabfallen der Lastelemente zu verhindern. Ähnliches ist beispielsweise bei Langguttransportern für Holz oder Rohre bekannt, wobei so genannte Rungenwagen zum Einsatz kommen.

Um nun die genannten Lastelemente aus der Ablageeinrichtung auszuheben, bietet es sich an, mit einer Hebeeinrichtung von unten durch eine bodenseitige Öffnung in die Ablageeinrichtung einzufahren Eine solche Hebeeinrichtung ist, z.B., aus DE 2 634 629 B bekannt. Allerdings weisen Ablageeinrichtungen der genannten Art an ihrer Unterseite regelmäßig so genannte Gleitkufen oder andere Strukturen auf, deren Abstand voneinander in Querrichtung der Ablageeinrichtung geringer ist als der Abstand zwischen den Rungen (entsprechend einer Nutzbreite der Ablageeinrichtung). Somit ist es nicht ohne weiteres möglich, in der skizzierten Art und Weise von unten in die Ablageeinrichtung einzufahren, um alle in der Ablageeinrichtung enthaltenen Lastelemente auszuheben.

Der Erfindung liegt die Aufgabe zugrunde, eine Vorrichtung der eingangs genannten Art zu schaffen, welche es ermöglicht, in der genannten Art und Weise von unten in eine Ablageeinrichtung für Lastelemente einzufahren, beim Ausheben der Lastelemente jedoch die gesamte verfügbare Breite der Ablageeinrichtung abzudecken. Dabei soll die zu schaffende Vorrichtung möglichst einfach und kostengünstig ausgebildet sein und dabei insbesondere mit möglichst wenigen anzusteuernden und entsprechend zu versorgenden Betätigungselementen, beispielsweise Zylinder-Kolben-Einheiten, auskommen.

Die Aufgabe wird erfindungsgemäß gelöst durch eine Vorrichtung mit den Merkmalen des beigefügten Patentanspruchs 1. Bevorzugte Weiterbildungen der Erfindung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß umfasst eine Vorrichtung zum Ausheben von Lastelementen, insbesondere Metallstangen, aus einer Ablageeinrichtung, wobei die Ablageeinrichtung wenigstens eine bodenseitige Öffnung zum Einfahren einer Hebeeinrichtung der Vorrichtung aufweist, und die Vorrichtung ein Betätigungselement zum Bewirken einer Hubbewegung der Hebeeinrichtung; umfasst, die folgenden Bestandteile bzw. Merkmale:
a) die genannte Hebeeinrichtung, welche in ihrer Breite verstellbar ausgebildet zum Anheben der Lastelemente;
b) eine Führungseinrichtung für die Hebeeinrichtung, nach deren Maßgabe die Breite der Hebeeinrichtung während einer ersten Phase der Hubbewegung auf einen Wert aus einem ersten Bereich eingestellt ist, so dass die Hebeeinrichtung durch die Öffnung in die Ablageeinrichtung einfahrbar ist, und nach deren Maßgabe die Breite der Hebeeinrichtung während einer zweiten Phase der Hubbewegung auf einen Wert aus einem zweiten Bereich eingestellt ist, so dass die Lastelemente durch die Hebeeinrichtung aus der Ablageeinrichtung aushebbar sind.

Die Hebeeinrichtung dient zum eigentlichen Ausheben der Lastelemente und ist erfindungsgemäß in ihrer Breite verstellbar, um zunächst durch die Öffnung in die Ablageeinrichtung einfahren zu können und nach anschließender Verbreiterung den gesamten Bereich zwischen den seitlichen Begrenzungen der Ablageeinrichtung abzudecken. Das eine Betätigungselement dient zum Bewirken einer Hubbewegung der Hebeeinrichtung, während die genannte Führungseinrichtung während der Hubbewegung dafür sorgt, dass zunächst während einer ersten Phase die Breite der Hebeeinrichtung einen ersten Wert annimmt, der in einem ersten Wertebereich liegt. Dabei ist zu fordern, dass dieser erste Wertebereich nur solche Werte umfasst, die kleiner sind als eine Breite der Öffnung der Ablageeinrichtung, so dass die Hebeeinrichtung durch die genannte Öffnung in die Ablageeinrichtung einfahren kann. Während einer zweiten Phase der Hubbewegung sorgt die Führungseinrichtung dann dafür, dass die Breite der Hebeeinrichtung einen Wert aus einem zweiten Wertebereich annimmt, welcher solche Breitenwerte enthält, die im Wesentlichen der gesamten verfügbaren Breite der Ablageeinrichtung entsprechen, so dass die Hebeeinrichtung zum Ausheben der Lastelemente die gesamte Breite der Ablageeinrichtung abdecken kann.

Vorzugsweise ist das Betätigungselement gemäß einer Weiterbildung der vorliegenden Erfindung als einzelne Zylinder-Kolben-Einheit ausgebildet. In jedem Fall verzichtet die vorliegende Erfindung jedoch auf das Vorsehen zusätzlicher Betätigungselemente in der Hebeeinrichtung selbst, um deren Breite in der gewünschten Weise einzustellen. Dies geschieht erfindungsgemäß während bzw. aufgrund der Hubbewegung allein nach Maßgabe der Führungseinrichtung.

Letztere ist im Zuge einer anderen Weiterbildung der vorliegenden Erfindung vorzugsweise als Kulissenführung ausgebildet. Sie kann in diesem Zusammenhang insbesondere zwei spiegelsymmetrisch angeordnete bzw. ausgebildete Kulissenteile oder -hälften aufweisen, zwischen denen sich die genannte Hebeeinrichtung geführt bewegt, worauf weiter unten noch genauer eingegangen wird.

Nach einer äußerst bevorzugten Weiterbildung der vorliegenden Erfindung weist die Hebeeinrichtung zwei um eine gemeinsame Achse schwenkbare Hebelarme auf, deren erstes Ende jeweils mit der Führungseinrichtung zusammenwirkt und deren zweites Ende jeweils mit einem Breitenänderungselement der Hebeeinrichtung zusammenwirkt. Mit anderen Worten: Die Führungseinrichtung wirkt auf das jeweils erste Ende der Hebelarme ein und sorgt für ein Verschwenken um die genannte gemeinsame Achse. Dies führt zu einer entsprechenden scherenartigen Bewegung der jeweils zweiten Enden der Hebelarme, welche mit jeweils einem Breitenänderungselement der Hebeeinrichtung zusammenwirken, um die gewünschte Breitenänderung zu bewirken.

Dabei kann vorgesehen sein, dass nach Maßgabe der Führungseinrichtung während einer ersten Phase der Hubbewegung die ersten Enden und/oder die zweiten Enden der Hebelarme einen minimalen Abstand voneinander aufweisen. Dies entspricht dann vorzugsweise einem Zustand minimaler Breite der Hebeeinrichtung, so dass diese durch die Öffnung in die Ablageeinrichtung einfahrbar ist. Weiterhin kann vorgesehen sein, dass nach Maßgabe der Führungseinrichtung während der zweiten Phase der Hubbewegung die ersten Enden und/oder die zweiten Enden der Hebelarme einen maximalen Abstand voneinander aufweisen. Dies entspricht dann vorzugsweise einen Zustand maximaler Breite der Hebeeinrichtung, in welchem diese die gesamte Nutzbreite der Ablageeinrichtung zum Ausheben von Lastelementen abdecken kann.

Vorzugsweise sind die bereits erwähnten Breitenänderungselemente der Hebeeinrichtung derart ausgebildet, dass sie jeweils eine Zunge aufweisen, welche durch das zweite Ende des jeweiligen Hebelarms zum Verändern der Breite der Hebeeinrichtung quer zur Richtung der Hubbewegung verschiebbar ist.

Im Zuge einer wieder anderen Weiterbildung der erfindungsgemäßen Vorrichtung ist vorgesehen, dass die Hebeeinrichtung einen Tragbalken umfasst und dass jedes Breitenänderungselement an dem Tragbalken oder in einer Ausnehmung des Tragbalkens geführt ist. Nach erfolgtem seitlichen Ausfahren der Breitenänderungselemente bzw. deren Zungen bilden dann letztere zusammen mit dem Tragbalken die zum Ausheben der Lastelemente wirksame Hebeeinrichtung.

Vorzugsweise ist vorgesehen, dass die Hebelarme durch das Eigengewicht der Hebevorrichtung vorgespannt sind, so dass sie unabhängig von der Führungseinrichtung bestrebt sind, sich scherenartig mit ihren ersten Enden und/oder mit ihren zweiten Enden voneinander zu entfernen und so einen maximalen Abstand voneinander anzunehmen, was erfindungsgemäß durch die vorgesehene Führungseinrichtung beeinflusst bzw. gesteuert wird.

Dieser Umstand lässt sich auch derart ausdrücken, dass die Führungseinrichtung im Zuge einer entsprechenden Weiterbildung der vorliegenden Erfindung dazu ausgebildet ist, gegen die Vorspannung der Hebelarme zu wirken, um so den Abstand zwischen den ersten und/oder zweiten Enden der Hebelarme zu verringern bzw. auf ein gewünschtes Maß zu reduzieren, insbesondere zum Hindurchbewegen durch die Öffnung in der Ablageeinrichtung.

Eine wieder andere Weiterbildung der vorliegenden Erfindung sieht vor, dass die Hebelarme jeweils eine Aufnahme für ein Verriegelungselement des Breitenänderungselements aufweisen. Die genannten Aufnahmen dienen vorzugsweise zum Verriegeln des Breitenänderungselements in seiner Stellung gemäß der zweiten Phase, um nach Art einer Drehmomentstütze ein Verkippen der Breitenänderungselemente zu verhindern.

Weitere Eigenschaften und Vorteile der vorliegenden Erfindung ergeben sich aus der nachfolgenden Beschreibung von Ausführungsbeispielen anhand der Zeichnung.

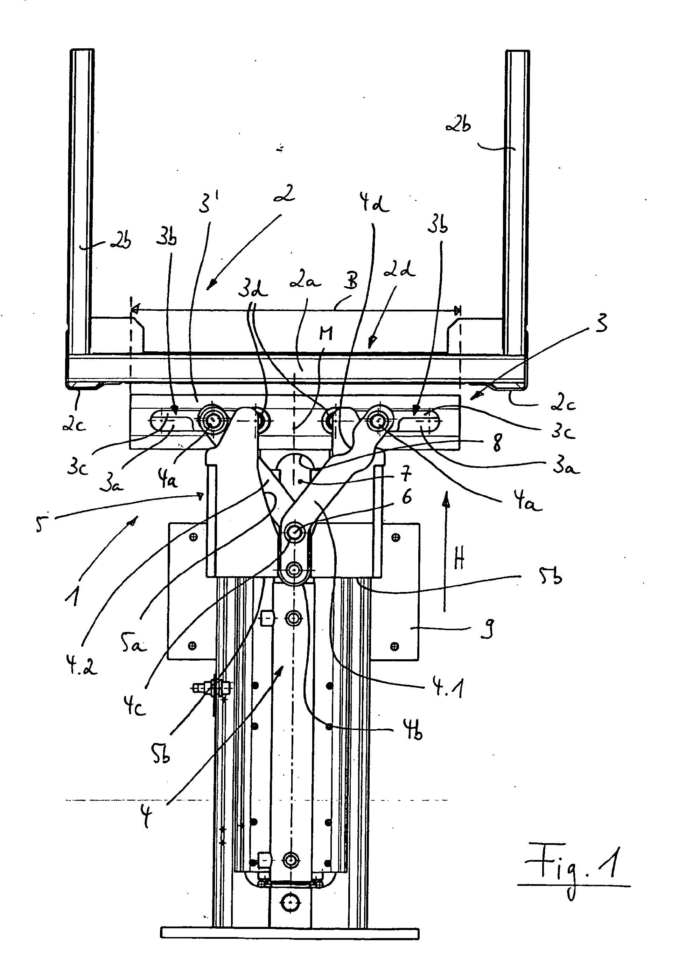

Figuren 1 bis 7 zeigen zeitlich aufeinander folgende Zustände einer Ausgestaltung der erfindungsgemäßen Vorrichtung im Zusammenwirken mit einer Kassette zur Lagerung von Lastelementen in Form von Metallstangen.

Nachfolgend werden in allen Figuren zum Bezeichnen gleicher oder gleichwirkender Elemente jeweils dieselben Bezugszeichen verwendet.

Unter Bezugnahme auf Figur 1 bezeichnet Bezugszeichen 1 eine erfindungsgemäße Vorrichtung zum Ausheben von Lastelementen, insbesondere Metallstangen, aus einer Ablageeinrichtung 2, welche vorliegend nach Art einer Kassette ausgebildet ist. Die Kassette 2 umfasst Querholme 2a und seitlich mit diesen verbundene Rungen 2b als seitliche Haltestangen für die aufzunehmenden Lastelemente (nicht gezeigt). Unterhalb der Querholme 2a weist die Kassette 2 seitliche Gleitkufen 2c auf, die insbesondere zum Abstellen der Kassette 2 dienen. Im Bereich zwischen den Gleitkufen 2c weist die Kassette 2 eine bodenseitige Öffnung 2d auf, welche in den Figuren nicht unmittelbar erkennbar ist, da sie sich vor dem Querholm 2a bzw. hinter diesem befindet.

Die genannte Öffnung 2d dient insbesondere zum Einfahren der Vorrichtung 1 zum Ausheben von Lastelementen, worauf weiter unten genauer eingegangen wird.

Die Vorrichtung 1 zum Ausheben von Lastelementen umfasst zunächst eine mit einem Tragbalken 3' ausgestattete Hebeeinrichtung 3, welche in ihrer Breite B verstellbar ausgebildet ist und welche dazu dient, die Lastelemente anzuheben. Die Breitenverstellung der Hebeeinrichtung 3 ist erforderlich, um den Tragbalken 3' zunächst durch die Öffnung 2d zwischen den Gleitkufen 2c der Kassette 2 hindurchbewegen zu können, anschließend jedoch die gesamte Breite der Kassette 2 zwischen den Rungen 2b abzudecken.

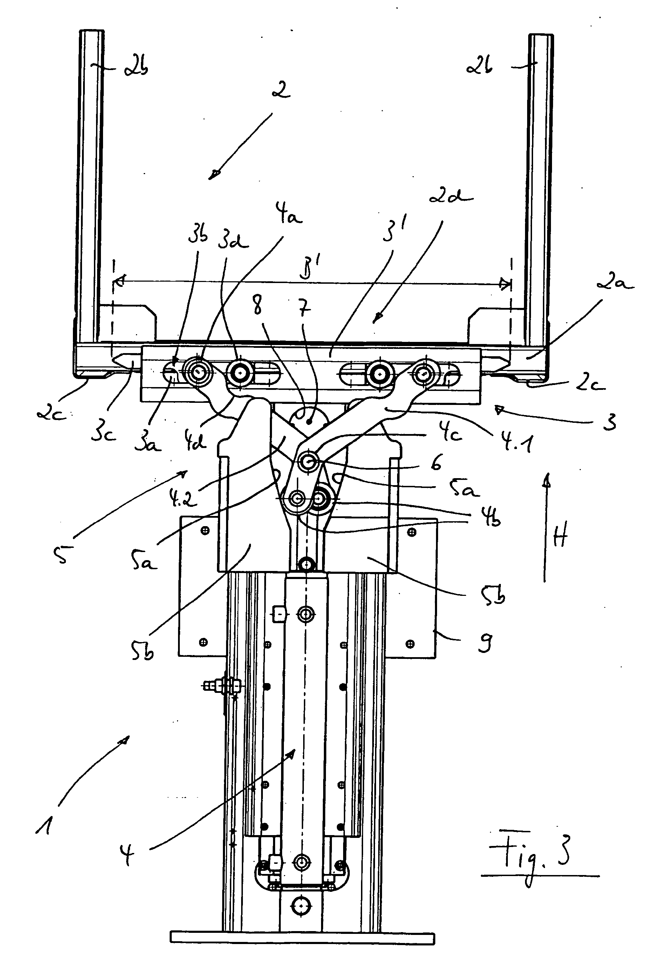

Neben der bereits genannten Hebeeinrichtung 3 weist die Vorrichtung 1 zum Ausheben von Lastelementen ein Betätigungselement 4 zum Bewirken einer Hubbewegung H der Hebeeinrichtung 3 auf, welches vorliegend als Zylinder-Kolben-Einheit ausgebildet ist. Außerdem umfasst die Vorrichtung 1 eine Führungseinrichtung 5 für die Hebeeinrichtung 3, welche vorliegend als Kulissenführung ausgebildet ist. Die Führungseinrichtung 5 dient dazu, die Breite der Hebeeinrichtung 3 während einer ersten Phase der Hubbewegung H auf einen Wert B aus einem ersten Bereich einzustellen, so dass die Hebeeinrichtung 3 mit dem Tragbalken 3' durch die Öffnung 2d in die Kassette 2 einfahrbar ist. Weiterhin dient die Führungseinrichtung 5 dazu, die Breite der Hebeeinrichtung 3 während einer zweiten Phase der Hubbewegung H auf einen Wert aus einem zweiten Bereich einzustellen, so dass die Lastelemente durch die Hebeeinrichtung 3 aus der Kassette 2 aushebbar sind, wobei - wie gesagt - die gesamte Breite der Kassette 2 abgedeckt werden soll. Auf die genannte zweite Phase der Hubbewegung 3 wird weiter unten anhand der Figuren 3 bis 7 noch genauer eingegangen.

Die Hebeeinrichtung 3 der dargestellten Vorrichtung 1 zum Ausheben von Lastelementen weist - wie bereits erwähnt - einen Tragbalken 3' auf, welcher quer zur Hubrichtung H orientierte Ausnehmungen 3a in Form von Langlöchern besitzt, die jeweils symmetrisch bezüglich der Mittelachse M des Tragbalkens angeordnet sind. Die Ausnehmungen 3a dienen jeweils als Führung für eine bolzen-, zapfen- oder auch rollenartige Struktur 4a, die an einem Ende jeweils eines Hebelarms 4.1, 4.2 angeordnet ist. Die Hebelarme 4.1, 4.2 sind jeweils abgewinkelt ausgebildet und bei Bezugszeichen 6 gemeinsam um eine senkrecht zur Blattebene verlaufende Schwenkachse an der Zylinder-Kolben-Einheit 4 angelenkt. Die Hebelarme 4.1, 4.2 sind bezüglich der genannten gemeinsamen Schwenkachse gegeneinander vorgespannt, so dass sie bestrebt sind, den Abstand zwischen ihren in den Ausnehmungen 3a aufgenommenen Enden quer zur Richtung der Hubbewegung H scherenartig zu vergrößern.

Verhindert wird dies durch eine an den jeweiligen anderen Enden der Hebelarme 4.1, 4.2 angeordnete Gleit- oder Rolleneinheit 4b, welche jeweils mit einer Innenfläche 5a der Führungseinrichtung 5 zusammenwirkt. Die Führungseinrichtung 5 selbst besteht aus zwei bezüglich der Mittelachse M des Tragbalkens 3' spiegelbildlichen Kulissenhälften 5b, wobei der Abstand zwischen den Innenflächen 5a der Kulissenhälften im unteren Bereich der Führungseinrichtung 5 im Wesentlichen gerade dem Durchmesser der Einheit 4b entspricht, sich dann in einem mittleren Bereich der Führungseinrichtung 5 angenähert durch eine fast lineare Kurve verbreitert, um dann in einem oberen Bereich der Führungseinrichtung 5 wieder einen konstanten Wert anzunehmen.

Parallel zu der Hebelarm-Schwenkachse bei Bezugszeichen 6 weist die Hebeeinrichtung 3 eine weitere bolzen- oder zapfenartige Struktur 4c analog derjenigen bei Bezugszeichen 4a auf, worauf später noch genauer eingegangen wird. Weiterhin besitzt die Hebeeinrichtung 3 bei Bezugszeichen 7 eine Führung für die vorstehend genannte Struktur 4c, welche unterhalb des eigentlichen Tragbalkens in einer teilkreisförmigen Anschlagstruktur 8 endet.

Zumindest die Führungseinrichtung 5 sowie der stationäre Teil (Zylinder) des Betätigungselements 4 sind mit einer ebenfalls stationären Tragstruktur 9 der Vorrichtung 1 fest verbunden.

In Längsrichtung der Kassette 2, das heißt senkrecht zur Blattebene der Figuren können mehrere Vorrichtungen 1 hintereinander angeordnet sein, um längliche Lastelemente, insbesondere Metallstangen mit bis zu einer Länge von 6 m und mehr, aus der Kassette 2 auszuheben.

Über die zapfen- oder bolzenartige Strukturen 4a sind die Hebelarme 4.1, 4.2 gelenkig mit Breitenänderungselementen 3b der Hebeeinrichtung 3 verbunden, welche an ihrem distalen Ende eine so genannte Zunge 3c aufweisen, auf welche weiter unten noch genauer eingegangen wird. Die Breitenänderungselemente 3b sind über die Hebelarme 4.1, 4.2 quer zur Richtung der Hubbewegung H verschiebbar, worauf ebenfalls weiter unten noch genauer eingegangen wird.

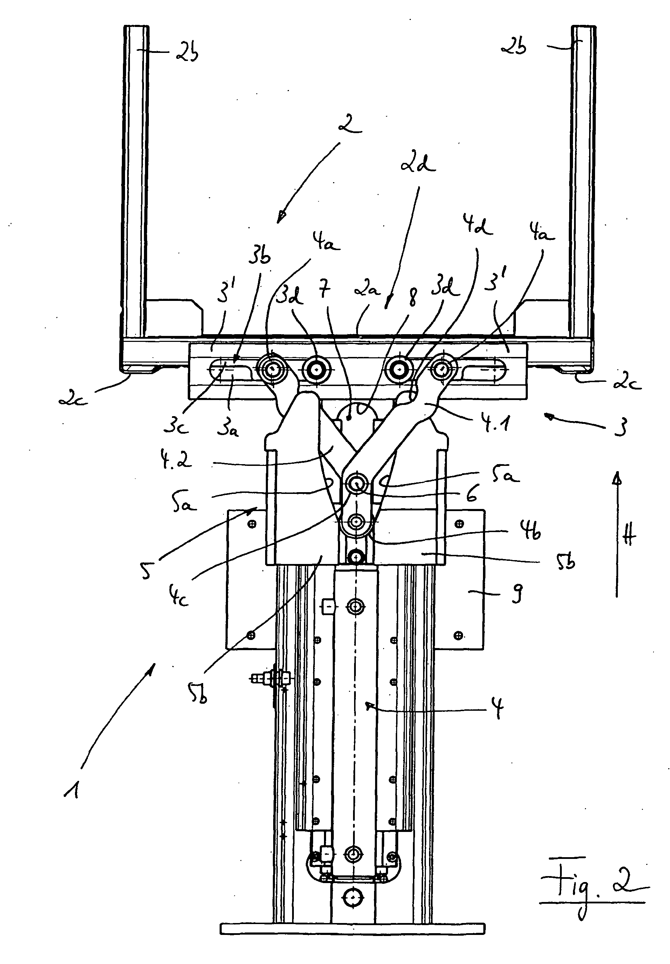

Die nachfolgenden Figuren 2 bis 7 zeigen die Vorrichtung 1 gemäß Figur 1 in ihrem Zusammenwirken mit der Kassette 2 zu verschiedenen, späteren Zeitpunkten im Verlauf der Hubbewegung H, welche durch das Betätigungselement 4 bewirkt ist.

Wie bereits erwähnt, bezeichnen in allen Figuren gleiche Bezugszeichen gleiche oder gleich wirkende Elemente.

In Figur 2 ist erkennbar, wie durch das Betätigungselement 4 die gesamte Hebeeinrichtung 3 einschließlich der Hebelarme 4.1, 4.2 in Richtung des Pfeils H nach oben bewegt wurde, so dass sich der Tragbalken 3' bereits innerhalb der Öffnung 2d befindet.

Die Einheit 4b befindet sich noch in dem genannten unteren Bereich zwischen den Flächen 5a der Kulissenteile 5b, so dass es im Vergleich mit der Figur 1 noch zu keiner Schwenkbewegung der Hebelarme 4.1, 4.2 gekommen ist. Somit befinden sich auch die Breitenänderungselemente 3b mit ihren Zungen 3c noch in der in Figur 1 gezeigten Stellung, so dass die Breite B der Hebeeinrichtung 3 unverändert geblieben ist. Eben dieser Umstand ermöglicht das Hindurchfahren durch die Öffnung 2d zwischen den Gleitkufen 2c der Kassette 2.

In Figur 3 haben die Einheiten 4b an den jeweils unteren Enden der Hebelarme 4.1, 4.2 aufgrund der Hubbewegung H den unteren, engen Bereich der Führungseinrichtung 5 verlassen. Aufgrund des Eigengewichts der Hebeeinrichtung 3 kommt es zu einer scherenartigen Auseinanderbewegung der Hebelarme 4.1, 4.2 nach Maßgabe der Innenflächen 5a der Führungseinrichtung 5. Dadurch bewegen sich auch die jeweils anderen Enden der Hebelarme 4.1, 4.2 innerhalb der Ausnehmungen 3a seitlich quer zur Richtung der Hubbewegung H auseinander, was zu einer entsprechenden Verschiebung der Breitenänderungselemente 3b quer zur Richtung der Hubbewegung H nach außen führt. Deren Zungen 3c treten über die Abmessung des eigentlichen Tragbalkens 3' hinaus seitlich nach außen hervor, so dass sich die effektive Breite der Hebeeinrichtung 3 gegenüber dem in den Figuren 1 und 2 gezeigten Maß B auf ein Maß B' erhöht. Letzteres entspricht noch nicht vollständig der gesamten Breite zwischen den Rungen 2b der Kassette 2, da sich die Einheiten 4b noch nicht im Bereich des maximalen Abstands zwischen den Innenflächen 5a der Führungseinrichtung 5 befinden.

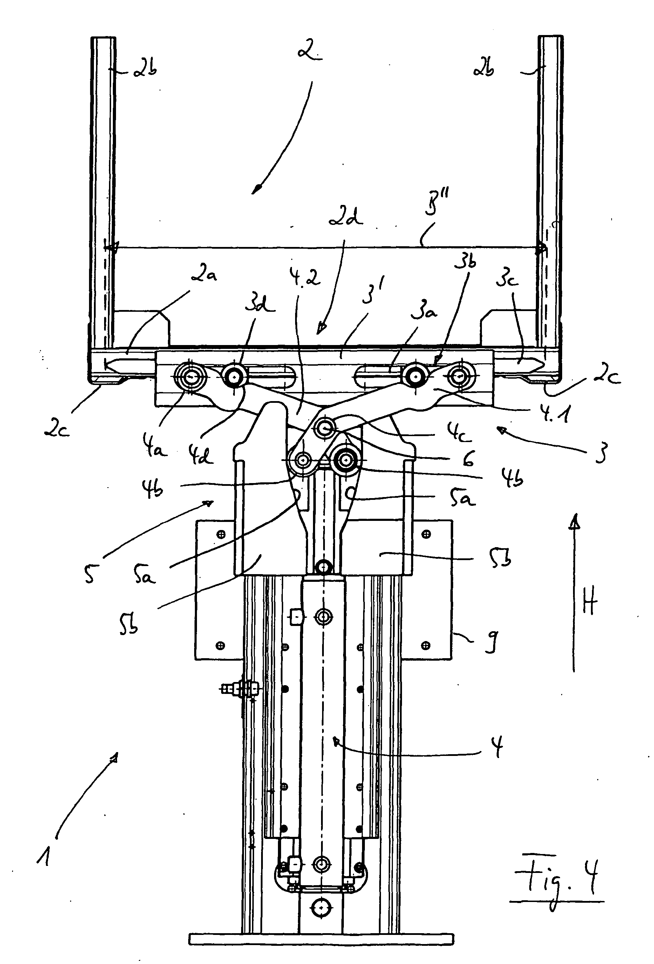

Dieser Zustand ist nun in der nachfolgenden Figur 4 zeichnerisch dargestellt. Demgemäß haben die Einheiten 4b den oberen Bereich der Führungseinrichtung 5 erreicht, in welchem die Innenflächen 5a einen konstanten, maximalen Abstand voneinander aufweisen. Dies entspricht einer maximalen seitlichen Verschiebung der Breitenänderungselemente 3b bzw. deren Zungen 3c, so dass nun die Hebeeinrichtung 3 mit einer Breite B" wenigstens den gesamten verfügbaren Raum zwischen den Rungen 2b der Kassette 2 abdeckt, um Lastelemente aus der Kassette 2 auszuheben.

Zugleich hat das Betätigungselement bzw. dessen zapfen- oder bolzenartige Struktur 4c den oberen Anschlag 8 der Führung 7 erreicht, um ein weiteres Anheben der Hebeeinrichtung 3 zum Ausheben der Lastelemente zu unterstützen. Wie der Fachmann erkennt, kommt es bei der Bewegung der Einheiten 4b im mittleren Bereich der Führungseinrichtung 5 gemäß den Figuren 2 und 3 aufgrund des möglichen Verschwenkens der Hebelarme 4.1, 4.2 praktisch zu keiner Aufwärtsbewegung der Hebeeinrichtung 3.

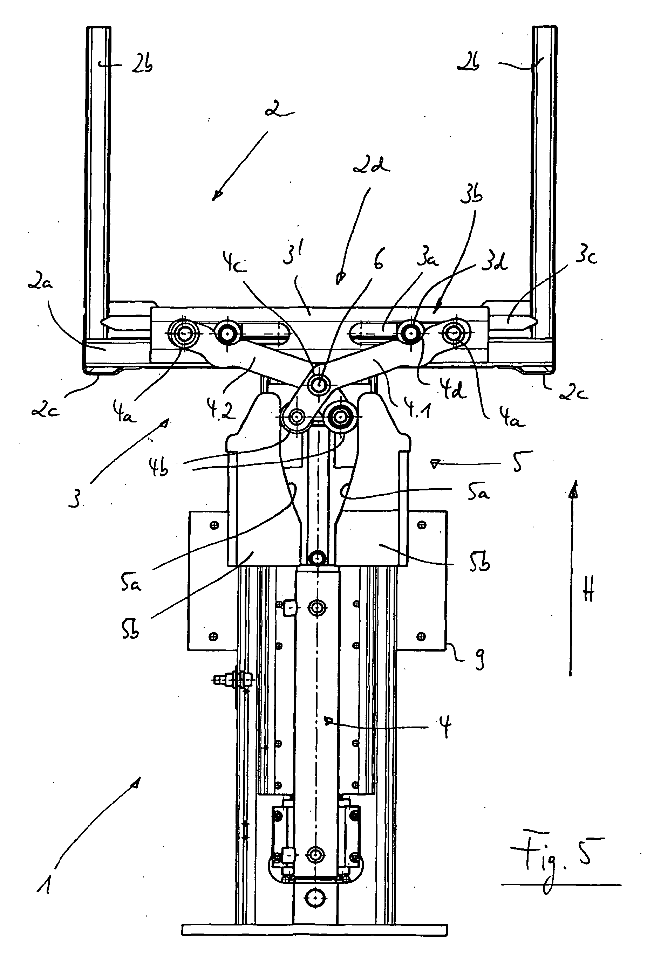

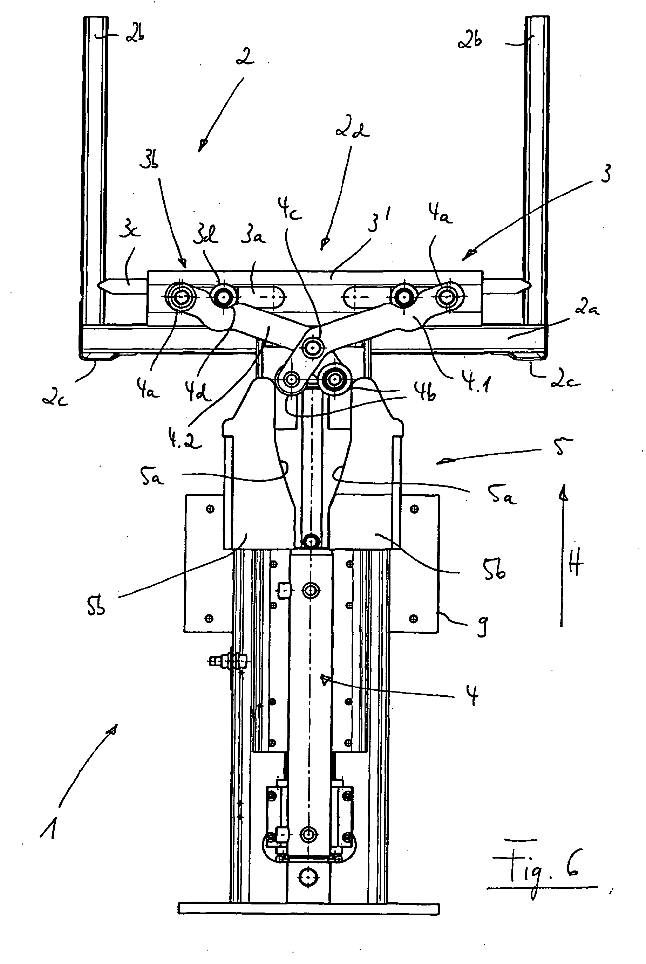

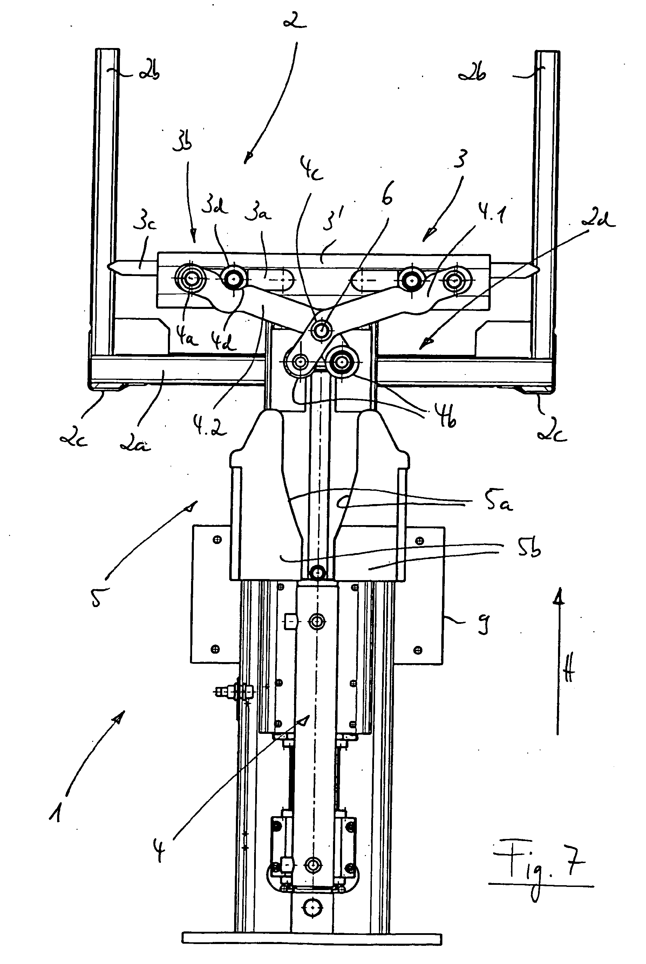

Die Figuren 5 bis 7 zeigen die weitere Aufwärtsbewegung der Hebeeinrichtung 3 in Richtung des Pfeils H, wobei es auch nach Verlassen der Führungseinrichtung 5 nach oben (vgl. Figuren 6 und 7) zu keinem weiteren Verschwenken der Hebelarme 4.1, 4.2 kommen kann, da ein nicht dargestellter Zapfen hinter den Hebelarmen 4.1, 4.2 in bzw. in Verlängerung der Schwenkachse 6 in den oberen Anschlag 8 eintaucht und den Abstand bzw. die Breite B" fixiert.

Wie aus den Figuren 1 bis 7 ersichtlich, weisen die Hebelarme 4.1, 4.2 benachbart den bolzen- oder zapfenartigen Strukturen 4a noch jeweils eine Aufnahme 4d für ein ebenfalls bolzen- oder zapfenartiges Verriegelungselement 3d der Breitenänderungselemente 3b auf. Das Verriegelungselement 3b greift beim Erreichen des oberen Bereichs der Führungseinrichtung 5 gemäß Figur 4 in die jeweilige Aufnahme 4d ein und sorgt dadurch insbesondere für eine Momentenabstützung der Breitenänderungselemente 3b beim Ausheben von Lastelementen.

Die Rückbewegung nach erfolgtem Ausheben der Lastelemente oder beim Ablegen derselben innerhalb der Kassette erfolgt in umgekehrter Reihenfolge der Figuren 1 bis 7, worauf vorliegend nicht weiter einzugehen ist.

Durch die Verwendung der beschriebenen Vorrichtung 1 ist es erstmals möglich, das Ausheben von Lastelementen von unten durch eine Kassette 2 mittels nur eines einzigen Betätigungselements, insbesondere in Form einer Zylinder-Kolben-Einheit zu realisieren.

## Patentansprüche

1. Vorrichtung (1) zum Ausheben von Lastelementen, insbesondere Metallstangen, aus einer Ablageeinrichtung (2), wobei die Ablageeinrichtung wenigstens eine bodenseitige Öffnung (2d) zum Einfahren einer Hebeeinrichtung (3) der Vorrichtung aufweist, und die Vorrichtung ein Betätigungselement (4) zum Bewirken einer Hubbewegung (H) der Hebeeinrichtung; umfasst, **dadurch gekennzeichnet, dass** die Vorrichtung ebenfalls umfasst:
a) die Hebeeinrichtung, welche in ihrer Breite (B, B', B") verstellbar ausgebildet ist, zum Anheben der Lastelemente;
b) eine Führungseinrichtung (5) für die Hebeeinrichtung, nach deren Maßgabe die Breite der Hebeeinrichtung während einer ersten Phase der Hubbewegung auf einen Wert (B) aus einem ersten Bereich eingestellt ist, so dass die Hebeeinrichtung durch die Öffnung in die Ablageeinrichtung einfahrbar ist, und nach deren Maßgabe die Breite der Hebeeinrichtung während einer zweiten Phase der Hubbewegung auf einen Wert (B") aus einem zweiten Bereich eingestellt ist, so dass die Lastelemente durch die Hebeeinrichtung aus der Ablageeinrichtung aushebbar sind.

2. Vorrichtung (1) nach Anspruch 1,
**dadurch gekennzeichnet,**
**dass** das Betätigungselement (4) als einzelne Zylinder-Kolben-Einheit ausgebildet ist.

3. Vorrichtung (1) nach Anspruch 1 oder 2,
**dadurch gekennzeichnet,**
**dass** die Führungseinrichtung (5) als Kulissenführung ausgebildet ist.

4. Vorrichtung (1) nach mindestens einem der vorhergehenden Ansprüche,
**dadurch gekennzeichnet,**
**dass** die Hebeeinrichtung (3) zwei um eine gemeinsame Achse schwenkbare Hebelarme (4.1, 4.2) aufweist, deren erstes Ende jeweils mit der Führungseinrichtung (5) zusammenwirkt und deren zweites Ende jeweils mit einem Breitenänderungselement (3b) der Hebeeinrichtung zusammenwirkt.

5. Vorrichtung (1) nach zumindest Anspruch 4,
**dadurch gekennzeichnet,**
**dass** nach Maßgabe der Führungseinrichtung (5) während der ersten Phase der Hubbewegung (H) die ersten Enden und/oder die zweiten Enden der Hebelarme (4.1, 4.2) einen minimalen Abstand voneinander aufweisen und dass nach Maßgabe der Führungseinrichtung während der zweiten Phase der Hubbewegung die ersten Enden und/oder die zweiten Enden der Hebelarme einen maximalen Abstand voneinander aufweisen.

6. Vorrichtung (1) nach Anspruch 4 oder 5,
**dadurch gekennzeichnet,**
**dass** das Breitenänderungselement (3b) der Hebeeinrichtung (3) eine Zunge (3c) aufweist, welche durch das zweite Ende des jeweiligen Hebelarms (4.1, 4.2) zum Verändern der Breite (B, B', B") der Hebeeinrichtung quer zur Richtung der Hubbewegung (H) verschiebbar ist.

7. Vorrichtung (1) nach mindestens einem der Ansprüche 4 bis 6,
**dadurch gekennzeichnet,**
**dass** jeder der Hebelarme (4.1, 4.2) gelenkig mit dem jeweiligen Breitenänderungselement (3b) verbunden ist.

8. Vorrichtung (1) nach mindestens einem der Ansprüche 4 bis 7,
**dadurch gekennzeichnet,**
**dass** die Hebeeinrichtung (3) einen Tragbalken (3') umfasst und dass jedes Breitenänderungselement (3b) an dem Tragbalken oder in einer Ausnehmung (3a) des Tragbalkens geführt ist.

9. Vorrichtung (1) nach zumindest Anspruch 4,
**dadurch gekennzeichnet,**
**dass** die Hebelarme (4.1, 4.2) abgewinkelt ausgebildet sind.

10. Vorrichtung (1) nach zumindest Anspruch 4,
**dadurch gekennzeichnet,**
**dass** die Hebelarme gegeneinander vorgespannt sind, so dass sie unabhängig von der Führungseinrichtung bestrebt sind, mit ihren ersten Enden und/oder mit ihren zweiten Enden einen maximalen Abstand voneinander anzunehmen.

11. Vorrichtung (1) nach zumindest Anspruch 10,
**dadurch gekennzeichnet,**
**dass** die Führungseinrichtung (5) dazu ausgebildet ist, gegen die Vorspannung der Hebelarme (4.1, 4.2) zu wirken, um den Abstand zwischen den ersten und/oder zweiten Enden der Hebelarme zu verringern.

12. Vorrichtung (1) nach zumindest Anspruch 4,
**dadurch gekennzeichnet,**
**dass** die Hebelarme (4.1, 4.2) jeweils eine Aufnahme (4d) für ein Verriegelungselement (3d) des Breitenänderungselements (3b) aufweisen, vorzugsweise zum Verriegeln des Breitenänderungselements in seiner Stellung gemäß der zweiten Phase.

## Claims

1. Apparatus (1) for lifting load elements, especially metal rods, out of a storage device (2), the storage device having at least one opening (2d) at the base for introducing a lifting device (3) of the apparatus, and the apparatus comprising an operating element (4) for bringing about a stroke movement (H) of the lifting device,
**characterised in that**
the apparatus also comprises:
a) the lifting device, which is adjustable in width (B, B', B"), for lifting the load elements;
b) a guide device (5) for the lifting device, in accordance with which, during a first phase of the stroke movement, the width of the lifting device is set to a value (B) from a first range, so that the lifting device is introducible through the opening into the storage device, and in accordance with which, during a second phase of the stroke movement, the width of the lifting device is set to a value (B") from a second range, so that the load elements are liftable out of the storage device by the lifting device.

2. Apparatus (1) according to claim 1,
**characterised in that**
the operating element (4) is in the form of a single cylinder-piston unit.

3. Apparatus (1) according to claim 1 or 2,
**characterised in that**
the guide device (5) is in the form of a guideway.

4. Apparatus (1) according to at least one of the preceding claims,
**characterised in that**
the lifting device (3) has two lever arms (4.1, 4.2) which are pivotable about a common axis, the first end of each arm co-operating with the guide device (5) and the second end of each arm co-operating with a width-alteration element (3b) of the lifting device.

5. Apparatus (1) according to at least claim 4,
**characterised in that**
in accordance with the guide device (5) during the first phase of the stroke movement (H) the first ends and/or the second ends of the lever arms (4.1, 4.2) are spaced a minimum distance apart from one another, and in accordance with the guide device during the second phase of the stroke movement the first ends and/or the second ends of the lever arms are spaced a maximum distance apart from one another.

6. Apparatus (1) according to claim 4 or 5,
**characterised in that**
the width-alteration element (3b) of the lifting device (3) has a tongue (3c) which, for altering the width (B, B', B") of the lifting device, is displaceable transversely with respect to the direction of the stroke movement (H) by means of the second end of the respective lever arm (4.1, 4.2).

7. Apparatus (1) according to at least one of claims 4 to 6,
**characterised in that**
each of the lever arms (4.1, 4.2) is in articulated connection with the respective width-alteration element (3b).

8. Apparatus (1) according to at least one of claims 4 to 7,
**characterised in that**
the lifting device (3) comprises a support beam (3'), and each width-alteration element (3b) is guided on the support beam or in an aperture (3a) in the support beam.

9. Apparatus (1) according to at least claim 4,
**characterised in that**
the lever arms (4.1, 4.2) are of angled form.

10. Apparatus (1) according to at least claim 4,
**characterised in that**
the lever arms are biased with respect to one another so that, independently of the guide device, their first ends and/or their second ends are urged to assume a maximum distance apart from one another.

11. Apparatus (1) according to at least claim 10,
**characterised in that**
the guide device (5) is constructed so as to act against the bias of the lever arms (4.1, 4.2) in order to reduce the distance between the first and/or second ends of the lever arms.

12. Apparatus (1) according to at least claim 4,
**characterised in that**
the lever arms (4.1, 4.2) each have a seat (4d) for a locking element (3d) of the width-alteration element (3b), especially for locking the width-alteration element in its position in accordance with the second phase.

## Revendications

1. Dispositif (1) pour enlever des charges d'une unité de stockage (2), notamment des barres métalliques, sachant que l'unité de stockage présente au moins une ouverture côté fond (2d) pour rentrer une unité de levage (3) du dispositif et que le dispositif comprend un élément d'actionnement (4) pour produire un mouvement de levage (H) de l'unité de levage ; **caractérisé en ce que** le dispositif comprend également :
a) l'unité de levage, qui est réalisée réglable en largeur (B, B', B"), pour soulever les charges ;
b) une unité de guidage (5) pour l'unité de levage, en fonction de laquelle la largeur de l'unité de levage est, pendant une première phase du mouvement de levage, réglée à une valeur (B) issue d'une première plage, de sorte que l'unité de levage peut être rentrée par l'ouverture dans l'unité de stockage, et en fonction de laquelle la largeur de l'unité de levage est, pendant une deuxième phase du mouvement de levage, réglée à une valeur (B") issue d'une deuxième plage, de sorte que les éléments de levage peuvent être enlevés de l'unité de stockage par l'unité de levage.

2. Dispositif (1) selon la revendication 1, **caractérisé en ce que** l'élément d'actionnement (4) est réalisé sous la forme d'un unique ensemble cylindre-piston.

3. Dispositif (1) selon la revendication 1 ou 2, **caractérisé en ce que** l'unité de guidage (5) est réalisée sous forme de guide à coulisse.

4. Dispositif (1) selon au moins une des revendications précédentes, **caractérisé en ce que** l'unité de levage (3) présente deux bras de levier (4.1, 4.2) pivotants autour d'un axe commun, bras dont la première extrémité coopère respectivement avec l'unité de guidage (5) et dont la deuxième extrémité coopère respectivement avec un élément de modification de largeur (3b) de l'unité de levage.

5. Dispositif (1) selon au moins la revendication 4, **caractérisé en ce que**, en fonction de l'unité de guidage (5) pendant la première phase du mouvement de levage (H), les premières extrémités et/ou les deuxièmes extrémités des bras de levier (4.1, 4.2) présentent une distance minimale entre elles, et **en ce que**, en fonction de l'unité de guidage pendant la deuxième phase du mouvement de levage, les premières extrémités et/ou les deuxièmes extrémités des bras de levier présentent une distance maximale entre elles.

6. Dispositif (1) selon la revendication 4 ou 5, **caractérisé en ce que** l'élément de modification de largeur (3b) de l'unité de levage (3) présente une patte (3c) qui peut être déplacée transversalement à la direction du mouvement de levage (H) par la deuxième extrémité du bras de levier respectif (4.1, 4.2) pour modifier la largeur (B, B', B") de l'unité de levage.

7. Dispositif (1) selon au moins une des revendications 4 à 6, **caractérisé en ce que** chacun des bras de levier (4.1, 4.2) est relié de manière articulée à l'élément de modification de largeur respectif (3b).

8. Dispositif (1) selon au moins une des revendications 4 à 7, **caractérisé en ce que** l'unité de levage (3) comprend une poutre porteuse (3'), et **en ce que** chaque élément de modification de largeur (3b) est guidé sur la poutre porteuse ou dans un évidement (3a) de la poutre porteuse.

9. Dispositif (1) selon au moins la revendication 4, **caractérisé en ce que** les bras de levier (4.1, 4.2) sont réalisés coudés.

10. Dispositif (1) selon au moins la revendication 4, **caractérisé en ce que** les bras de levier sont précontraints l'un par rapport à l'autre, de sorte qu'ils tendent, indépendamment de l'unité de guidage, à prendre une distance maximale entre eux par leurs premières extrémités et/ou par leurs deuxièmes extrémités.

11. Dispositif (1) selon au moins la revendication 10, **caractérisé en ce que** l'unité de guidage (5) est conçue pour agir à l'encontre de la précontrainte des bras de levier (4.1, 4.2), afin de réduire la distance entre les premières et/ou les deuxièmes extrémités des bras de levier.

12. Dispositif (1) selon au moins la revendication 4, **caractérisé en ce que** les bras de levier (4.1, 4.2) présentent respectivement un logement (4d) pour un élément de verrouillage (3d) de l'élément de modification de largeur (3b), de préférence pour verrouiller l'élément de modification de largeur dans sa position selon la deuxième phase.
